# EUROPEAN PATENT APPLICATION

(11) **EP 1 094 537 A2**
(43) Date of publication of application: **25.04.2001**
(21) Application number: 00122720.6
(22) Date of filing: 18.10.2000
(51) Int. Cl.: H01M 10/40

(54) **Lithium secondary battery**

(30) Priority: 19.10.1999 JP 29681499
(71) Applicant: NGK INSULATORS, LTD., Nagoya-City, Aichi Prefecture 467-8530 (JP)
(72) Inventor: Yang, Li, Nagoya-city, Aichi-prefecture, 467-8530 (JP); Yoshida, Toshihiro, Nagoya-city, Aichi-prefecture, 467-8530 (JP); Nemoto, Hiroshi, Nagoya-city, Aichi-prefecture, 467-8530 (JP)
(74) Representative: Leson, Thomas Johannes Alois, Dipl.-Ing.

(57) **Abstract**

A lithium secondary battery includes an electrode body obtained by winding or laminating a positive electrode and a negative electrode via a separator, and a non-aqueous electrolytic solution containing a lithium compound as the electrolyte. The non-aqueous electrolytic solution contains water (H₂O) and hydrofluoric acid (HF) in a total concentration of 10,000 ppm or less. Owing to the restriction of the total concentration of water and hydrofluoric acid contained in the non-aqueous electrolytic solution, the lithium secondary battery can suppress the deterioration of battery properties caused by water and hydrofluoric acid and has excellent cycle property and reliability.

## Description

### Background of the Invention

### (1) Field of the Invention

The present invention relates to a lithium secondary battery wherein the deterioration of battery properties caused by water and HF present in the non-aqueous electrolytic solution filled in the battery is suppressed and which has excellent cycle property and reliability.

### (2) Description of Related Art

In recent years, lithium secondary battery has been found wide applications as a secondary battery of charge and discharge type, small in size and high in energy density which can function as an electric source of electronic appliances such as portable communication appliance, notebook type personal computer and the like. Further, in a situation where resource saving and energy saving are internationally drawing people's attention for the protection of global environment, lithium secondary battery is expected to be used, in the automobile industry, as a battery for driving the motor of electric automobile or hybrid electric automobile and, in the electric power industry, as a means for night storage of electricity for the effective use of electricity. Therefore, it is an urgent task to develop a practical large-capacity lithium secondary battery suitable for the above applications.

In lithium secondary battery, there are used, as the positive electrode active substance, a lithium transition metal compound oxide or the like and, as the negative electrode active substance, a carbon material such as hard carbon, graphite or the like. The lithium secondary battery employing such materials has a high reaction potential of about 4.1 V, making it impossible to use therein the same aqueous electrolytic solution as used in conventional secondary batteries. Hence, there is used, as the non-aqueous electrolytic solution for lithium secondary battery, a non-aqueous electrolytic solution comprising an organic solvent and a lithium compound dissolved therein as a lithium ion (Li⁺) electrolyte.

The organic solvent used as a material for the non-aqueous electrolytic solution of lithium secondary battery, ordinarily contains a very small amount of water as a contaminant present already in the production stage. Further, various materials and parts constituting the battery, for example, the electrode active substance powders, the collection substrates (metal foils), the metal terminals and the battery case contain adsorbed water at the surfaces because they are ordinarily stored in atmosphere; and the water may move into the non-aqueous electrolytic solution when assembling of battery is over.

When such water is present in the non-aqueous electrolytic solution, there is a high risk that the water causes decomposition of the electrolyte and an acidic substance, a gas and the like are generated. In such a case, the charge-discharge cycle property of battery (which is a change in battery capacity due to repetition of charge and discharge and is referred hereinafter to as "cycle property") is deteriorated, and the life of battery is shortened.

Lithium hexafluorophosphate (LiPF₆), for example, shows a high conductivity when dissolved in an organic solvent, and is drawing the highest attention as electrolyte. When LiPF₆ is used, however, hydrofluoric acid (HF) is generated if the organic solvent contains water. This HF dissolves or corrodes the metal materials used in the case, collector, etc. of battery and further dissolves the positive electrode active substance (transition metal) of battery. Furthermore, the HF forms a solid electrolyte interface (SEI) layer on the negative electrode active substance and hinders the action of Li⁺. Thus, the HF is known to cause the deterioration of battery properties. Such deterioration of battery properties is striking in the cyclic operation of battery wherein charge and discharge are repeated, and is a decisive defect of secondary battery.

In JP-A-5-226004, it is disclosed that the cycle property and property stability during storage, of lithium secondary battery are improved by controlling the water concentration in non-aqueous electrolytic solution at 5 to 450 ppm. However, when a non-aqueous electrolytic solution is prepared by dissolving an electrolyte in an organic solvent, the water contained in the organic solvent reacts with the electrolyte; thereby, HF is generated; and an equilibrium is reached. Therefore, even if water removal is made for the prepared non-aqueous electrolytic solution, the HF remains at a high probability.

It is therefore considered that even when the water in non-aqueous electrolytic solution is controlled, deterioration of cycle property is invited when HF is present in the non-aqueous electrolytic solution. Hence, the present inventors prepared a non-aqueous electrolytic solution in which the water concentration was controlled by using a molecular sieve as disclosed in the above literature (JP-A-5-226004) and then assembled a plurality of same lithium secondary batteries using the solution. However, the batteries showed a variation in cycle property.

The present inventors considered the reason for the above variation as follows. That is, the above result appears because (1) the invention disclosed in JP-A-5-226004 focuses only on the water contained in the non-aqueous electrolytic solution filled in a secondary battery and pays no attention to the HF generating when an electrolyte is dissolved in an organic solvent to prepare a non-aqueous electrolytic solution and (2) it is considered in the invention that the other battery members such as positive electrode and the like need only preliminary drying, or a drying step in battery assembling but before filling of non-aqueous electrolytic solution and do not need very severe drying.

It is certainly considered that when the water concentration in the non-aqueous electrolytic solution filled in a lithium secondary battery is controlled at a predetermined level, the concentration of the HF generating owing to the water concentration is restricted correspondingly and no big reduction in cycle property takes place. However, in a battery of large capacity produced by winding or laminating two electrodes each obtained by coating an electrode active substance on a collection substrate, the water adsorbed by the electrode active substances, etc. is thought not to be removed completely in ordinary drying.

For example, each electrode active substance is coated on a collection substrate using an organic binder and the resulting material is molded into a desired shape such as tape or the like, as described later. In this coating, the electrode active substance is mixed with an organic solvent or water and is used as a slurry or a paste. When, in making the slurry or the like, the electrode active substance is not sufficiently dried or the water content in the organic solvent is not appropriately controlled and, as a result, the water content in the slurry or the like is not appropriately controlled, the probability at which the electrode active substance contains adsorbed water, is very high.

Also when the atmosphere or drying conditions employed in molding the coated slurry or the like into a desired shape and the storage conditions of molded material are not appropriate, it is probable that external water is adsorbed by each electrode active substance. Such water adsorbed by the electrode active substance in a very small amount is difficult to completely remove by drying in battery assembling. Meanwhile, strict control of the water adsorbed by each electrode, in its production stage has a limit in view of the cost.

The water adsorbed by each electrode, particularly by each electrode active substance moves into a non-aqueous electrolytic solution when a battery is assembled, and reacts with the electrolyte of the electrolytic solution to generate HF. Thus, the water contained in each electrode, etc. and moving into the non-aqueous electrolytic solution has a large disadvantageous effect on battery properties; therefore, no good cycle property is obtained only by control of the water content in non-aqueous electrolytic solution filled in battery. As a result, it has become clear that control of the water concentration and HF concentration in non-aqueous electrolytic solution after battery assembling is important and necessary.

Incidentally, the battery members other than electrodes, even if they are dried before battery assembling, if the assembling is conducted in an ordinary atmosphere, are influenced by the humidity in atmosphere, etc. and may readsorb water on the surfaces. Further, assembling with drying is not preferred in view of the operability and the equipment cost required.

### Summary of the Invention

The present inventors made a study in order to alleviate the above-mentioned problems of the prior art. As a result, the present inventors found out that good cycle property is obtained when the total concentration of water and HF contained in the non-aqueous electrolytic solution of an assembled battery is a predetermined value or less.

According to the present invention, there is provided a lithium secondary battery comprising:
an electrode body obtained by winding or laminating a positive electrode and a negative electrode via a separator, and
a non-aqueous electrolytic solution containing a lithium compound as the electrolyte,
   wherein the non-aqueous electrolytic solution contains water (H₂O) and hydrofluoric acid (HF) In a total concentration of 10,000 ppm or less.

The lithium compound preferably used in the lithium secondary battery of the present invention is lithium hexafluorophosphate. As to the kind of the electrode active substances used in the present invention, there is no particular restriction; however, lithium manganese oxide of cubic system spinel structure containing lithium and manganese as the main components is preferably used as the positive electrode active substance because the internal resistance of battery can be suppressed at a low level and improvement of cycle property is also obtained owing to the synergistic effect with the suppression of deterioration of non-aqueous electrolytic solution. As the negative electrode active substance, a highly graphitized carbon fiber is used suitably. The present invention is employed suitably in a large battery having a capacity of 2 Ah or more. The lithium secondary battery of the present invention is suitably used, for example, as a power source for driving the motor of an electric automobile or a hybrid electric automobile, in both of which discharging at a large current is conducted frequently.

### Brief Description of Drawings

Fig. 1 is a perspective view showing the structure of a wound type electrode body.
Fig. 2 is a perspective view showing the structure of a lamination type electrode body.
Fig. 3 is a graph showing the results of a cycle test.
Fig. 4 is a graph showing the charge and discharge patterns in a cycle test.

### Detailed Description of Preferred Embodiments

The lithium secondary battery of the present invention uses a non-aqueous electrolytic solution containing, as the electrolyte, a lithium compound generating lithium ion (Li⁺) when dissolved. Therefore, the present lithium secondary battery has no restriction as to the other materials or the battery structure. First, description is made on the main members constituting the battery as well as on their structures.

One structure of the electrode body (which can be said the heart) of lithium secondary battery is a single cell structure comprising a positive electrode, a negative electrode (the two electrodes have a disc shape) and a separator interposed between the two electrodes, which structure is used by a coin battery of small capacity.

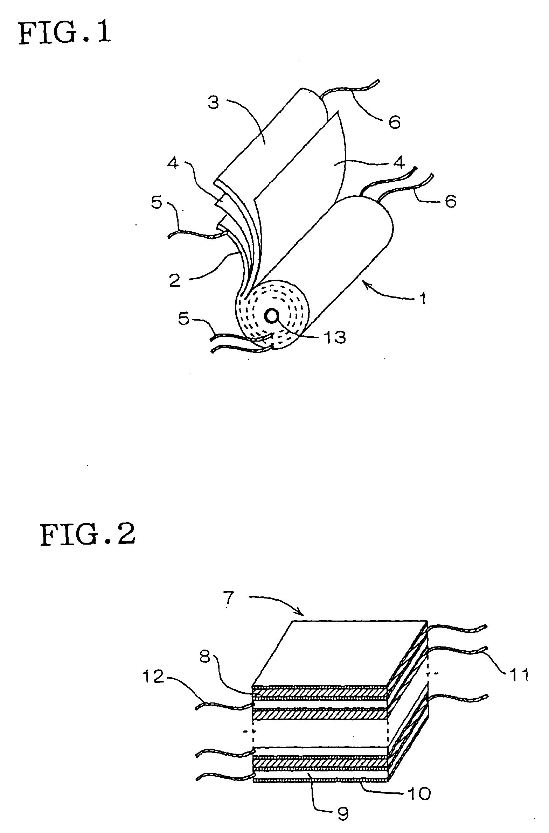

Meanwhile, one structure of the electrode body used by a battery of large capacity is a wound type. As shown in a perspective view of Fig. 1, a wound type electrode body 1 is constituted by winding, round a core 13, a positive electrode 2 and a negative electrode 3 via a separator 4 made of a porous polymer so that the positive electrode 2 and the negative electrode 3 make no direct contact with each other. A electrode lead 5 or 6 attached to the positive electrode 2 or the negative electrode 3 (hereinafter referred to as the electrode 2 or 3) may be at least one (in number); and it is easy to provide a plurality of the electrode leads 5 or 6 for smaller collection resistance.

Other structure of the electrode body includes a lamination type obtained by laminating a plurality of single cell type electrode bodies employed in a coin battery. As shown in Fig. 2, a lamination type electrode body 7 is obtained by laminating a given number of positive electrodes 8 and a given number of negative electrodes 9 in such a way that a separator 10 is interposed between one positive electrode and one negative electrode. At least one electrode lead 11 or 12 is fitted to each one electrode 8 or 9. The materials for the electrode 8 or 9, the production method therefor, etc. are the same as for the electrode 2 or 3 of the wound type electrode body 1.

Next, in-depth description is made on the constitution of the wound type electrode body 1. The positive electrode 2 is produced by coating a positive electrode active substance on both sides of a collection substrate. As the collection substrate, there is used a metal foil having good corrosion resistance to electrochemical reaction of positive electrode, such as aluminum foil, titanium foil or the like. Besides, there can be used a punched metal or a mesh. As the positive electrode active substance, there is preferably used a lithium transition metal compound oxide such as lithium manganese oxide (LiMn₂O₄), lithium cobalt oxide (LiCoO₂), lithium nickel oxide (LiNiO₂) or the like. Preferably, a fine carbon powder such as acetylene black or the like is added as a conductivity-improving agent.

Use of, in particular, lithium manganese oxide having a cubic system spinel structure (hereinafter referred to as "LiMn₂O₄ spinel") as the positive electrode active substance is preferred because the use, as compared with use of other positive electrode active substances, can allow the electrode body 1 to have a small resistance. The effect of the present invention (described later) of improvement of the property of non-aqueous electrolytic solution becomes more striking when combined with the above reduction in internal resistance, whereby the cycle property of battery is improved.

The LiMn₂O₄ spinel is not restricted to such a stoichiometric composition alone; and a spinel represented by a general formula LiMₓMn₂₋ₓO₄ (M is a substitution element and X is a substitution amount) obtained by substituting part of Mn of the stoichiometric composition with other element, may also be used preferably. As the substitution element M, there can be mentioned Li, Fe, Mn, Ni, Mg, Zn, B, Al, Co, Cr, Si, Ti, Sn, P, V, Sb, Nb, Ta, Mo and W.

The substitution element M is occluded in LiMn₂O₄ theoretically in the form of monovalent (Li), bivalent (Fe, Mn, Ni, Mg or Zn), trivalent (B, Al, Co or Cr), tetravalent (Si, Ti or Sn), pentavalent (P, V, Sb, Nb or Ta) or hexavalent (Mo or W) plus ion. Co and Sn may also be bivalent; Fe, Sb and Ti may also be trivalent; Mn may also be trivalent or tetravalent; and Cr may also be tetravalent or hexavalent. Therefore, the substitution element M may be present in a mixed valency state depending upon the kind. The amount of oxygen need not be 4 as in the case of stoichiometric composition and may be partly short or excessive as long as the required crystal structure is maintained.

The coating of the positive electrode active substance is conducted by adding a solvent, a binder, etc. to a positive electrode active substance powder, to prepare a slurry or a paste, coating the slurry or the paste on a collection substrate using a roll coater or the like, and drying the resulting material. Then, pressing, etc. are conducted as necessary.

The negative electrode 3 can be produced in the same manner as for the positive electrode 2. As the collection substrate of the negative electrode 3, there is preferably used a metal foil having good corrosion resistance to electrochemical reaction of negative electrode, such as copper foil, nickel foil or the like. As the negative electrode active substance, there is used an amorphous carbon material (e.g. soft carbon or hard carbon) or a highly graphitized carbon powder (e.g. artificial graphite or natural graphite).

As the separator 4, there is preferably used a three-layer separator obtained by interposing a microporous, lithium ion-transmittable polyethylene film (PE film) between porous, lithium ion-transmittable polypropylene films (PP films). In this separator, when the temperature of the electrode body 1 increases, the PE film softens at about 130°C, the micropores are collapsed, and the movement of lithium ion, i.e. the battery reaction is suppressed; thus, the separator functions also as a safety mechanism. By interposing the PE film between the PP films of higher softening point, the PP films retain the shape even when the PE film softens, whereby the contact and short-circuiting between the positive electrode 2 and the negative electrode 3 is prevented, battery reaction is prevented reliably, and safety is secured.

During the operation of winding the electrodes 2 and 3 and the separator 4, an electrode lead 5 or 6 is fitted to the area of the electrode 2 or 3 at which no electrode active substance is coated and where the collection substrate is exposed. As the electrode lead 5 or 6, there is preferably used a foil made of the same material as for the collection substrate of the electrode 2 or 3. The fitting of the electrode lead 5 or 6 to the electrode 2 or 3 can be conducted by ultrasonic welding, spot welding or the like. Preferably, one electrode lead 5 or 6 is fitted to one end of the electrode body 1 and the other electrode lead is fitted to other end of the electrode body 1, as shown in Fig. 1, because contact between the electrode lead 5 and the electrode lead 6 is avoidable.

In assembling a battery, first, the produced electrode body 1 is placed in a battery case in a stale that the electrode lead 5 or 6 is connected to a terminal for taking out the electricity generated, to outside and is held in a stable position; then, the electrode body 1 is impregnated with a non-aqueous electrolytic solution; thereafter, the battery case is sealed; thus, a battery is produced.

Next, description is made on the non-aqueous electrolytic solution used in the lithium secondary battery of the present invention. As the solvent of the non-aqueous electrolytic solution, there are preferably used carbonic acid esters such as ethylene carbonate (EC), diethyl carbonate (DEC), dimethyl carbonate (DMC), propylene carbonate (PC) and the like; γ-butyrolactone; tetrahydrofuran; acetonitrile; and so forth. These can be used singly or in admixture of two or more kinds.

As the lithium compound, i.e. electrolyte dissolved in the solvent, there are mentioned lithium complex fluoride compounds such as lithium hexafluorophosphate (LiPF₆), lithium borofluoride (LiBF₄) and the like; lithium halides such as lithium perchlorate (LiClO₄) and the like; and so forth. One or more of these compounds are dissolved in the above solvent. Use of LiPF₆ is particularly preferred because it hardly causes oxidative decomposition and has a high conductivity in the non-aqueous electrolytic solution.

In production of the non-aqueous electrolytic solution, the presence of a very small amount of water in produced electrolytic solution is inevitable although strict control for water is made in the steps of production and storage of solvent and electrolyte. Further, the probability of water adsorption by the electrode active substance is very high in view of the conditions for production of electrode active substance slurry and the environment during production of electrode. Furthermore, in the step of assembling of battery, the parts other than the non-aqueous electrolytic solution are ordinarily stored in atmosphere; therefore, it is highly probable that these parts contain a very small amount of adsorbed water.

A battery was produced using an organic solvent containing water in an amount of about 100 ppm (for prevention of HF generation); the battery was stored for about 1 week in a dry gas; then, part of the organic solvent was taken out from inside the battery and analyzed for water content. As a result, the water concentration was found to be higher than the level possessed by the organic solvent filled in the battery. The increased amount of water generates HF and an equilibrium is reached. This fact suggests that, as mentioned previously, the water adsorbed by the parts, etc. are not easily removed by mild treatments such as drying before or during battery assembling.

Hence, in the present invention, the total concentration of water (H₂O) and hydrofluoric acid (HF) contained in the non-aqueous electrolytic solution (hereinafter referred to as "total concentration") is specified at 10,000 ppm or less. This total concentration does not refer to the total concentration in the non-aqueous electrolytic solution before filling in battery, but to the total concentration in the non-aqueous electrolytic solution after filling in battery. The above total concentration level must be satisfied from battery assembling through battery use.

In the present invention, the concept of "total concentration" has been employed in view of (1) the water contained in the non-aqueous electrolytic solution used as a battery material, (2) the water adsorbed by various battery members (e.g. electrodes) (this water dissolves in the electrolytic solution after battery assembling), and (3) the HF generating from the above two kinds of water. As described in detail in the test results of Examples shown later, good cycle property is maintained when the total concentration is controlled at 10,000 ppm or less.

As the method for controlling the total concentration at 10,000 ppm or less, there are various suitable methods such as (1) a method disclosed in Japanese Patent Application No. 11-62332 by the present inventors, which comprises adding a halogen, sulfur dioxide, an organic base, an alcohol, etc.; (2) a method disclosed in the above literature, which comprises adding pyridine, etc.; (3) a method disclosed in Japanese Patent Application No. 11-236524 by the present inventors, which comprises using a water-extracting agent such as organic phosphorus compound or the like; and (4) a method which comprises adding a hydrofluoric acid-extracting agent such as organic silicon compound or the like.

There is also a method which comprises using a dehydrating agent such as molecular sieve or the like. In this method, it is preferred that a solvent is dehydrated to a minimum water level before an electrolyte is dissolved in the solvent. There can also be used a method in which a non-aqueous electrolytic solution is filled in excess in a battery, then the electrolytic solution is removed as fully as possible, and a fresh non-aqueous electrolytic solution is filled (thereby, the water dissolving into the non-aqueous electrolytic solution from battery members and the HF generating from the water are reduced). By the above-mentioned methods, the total concentration in non-aqueous electrolytic solution after battery assembling can be reduced. Needless to say, it is preferred that the battery members containing adsorbed water are sufficiently dried in preliminary drying or in the drying step after battery assembling and that the battery assembling is conducted in an environment of minimum moisture.

Regarding the total concentration, the measurement of the water concentration is preferably conducted by the Karl Fischer's method, and the measurement of the HF concentration is preferably conducted by the neutralization titration method. The non-aqueous electrolytic solution used for the measurement can be collected by a necessary amount by making a hole for sampling, in the battery or by opening the inlet for non-aqueous electrolytic solution, provided in the battery.

In the Karl Fischer's method, a non-aqueous electrolytic solution is dissolved or dispersed in methanol, and the resulting sample solution is titrated with a reddish brown Karl Fischer's reagent obtained by dissolving iodine, sulfur dioxide and pyridine in methanol ordinarily at a molar ratio of 1:3:10. The completion of the titration can be determined by colorimetry, potentiometry or amperometry.

In the neutralization titration method, a sample solution is dissolved in an excess of cold water of 5°C or lower; thereto is dropwise added an aqueous solution containing an appropriate concentration of sodium hydroxide (NaOH) until the color of BTB indicator turns green from yellow; the concentration of HF is determined from the amount of dropped solution.

Next, 5 kinds of batteries of Examples 1 to 3 and Comparative Examples 1 to 2, different in total concentration as show in Table 1 were produced and subjected to a cycle test for evaluation of cycle property. Each of these batteries was allowed to have a different total concentration by adding an appropriate amount of water to a particular non-aqueous electrolytic solution having a predetermined total concentration. The other members of battery and the test environment were the same for all the batteries, and the factors such as incoming of water into battery from outside owing to insufficient sealing of battery were eliminated. The water concentration and HF concentration shown in Table 1 were obtained by taking out an appropriate amount of the non-aqueous electrolytic solution in battery right after battery production or after cycle test and subjecting the taken-out electrolytic solution to the above-mentioned concentration measurement. To compensate the amount of taking out, a slight excess of the non-aqueous electrolytic solution was filled into each battery at the time of battery production.

**Table 1**

| | | H₂O Concentration (ppm) | HF concentration (ppm) | Total concentration (ppm) |
|---|---|---|---|---|
| Example 1 | After battery production | 5 | 105 | 110 |
| | After 20,000 cycles | 20 | 378 | 398 |
| Example 2 | After battery production | 20 | 1520 | 1540 |
| | After 20,000 cycles | 33 | 1668 | 1701 |
| Example 3 | After battery production | 50 | 8500 | 8550 |
| | After 20,000 cycles | 67 | 8750 | 8817 |
| Comparative Example 1 | After battery production | 90 | 9100 | 9190 |
| | After 20,000 cycles | 110 | 10120 | 10230 |
| Comparative Example 2 | After battery production | 400 | 12180 | 12580 |
| | After 20,000 cycles | 460 | 15600 | 16060 |

The batteries of Examples 1 to 3 and Comparative Examples 1 to 2 were each produced as follows. A LiMn₂O₄ spinel was used as the positive electrode active substance; thereto was added 4% by weight, based on the active substance, of acetylene black as a conductivity-improving agent; a solvent and a binder were added, to produce a material slurry for positive electrode; the slurry was coated on the both sides of an aluminum foil of 20 µm in thickness so that the slurry thickness became about 100 µm on each side, to produce a positive electrode; similarly, a negative electrode was produced by using a carbon powder as a negative electrode active substance and coating the both sides of a copper foil of 10 µm in thickness so that the coating thickness became about 80 µm on each side; using the positive electrode and the negative electrode, a wound type electrode body was produced; the electrode body was placed in a case; then, a non-aqueous electrolytic solution was filled. The control of the water concentration in non-aqueous electrolytic solution was made as mentioned previously, and the drying of other battery members was sufficiently made up to right before battery assembling. As the non-aqueous electrolytic solution, there was used a solution obtained by dissolving LiPF₆ in a 50/50 mixed solvent of EC and DEC in a concentration of 1 mole/liter. Each battery had a capacity of about 10 Ah after initial charge.

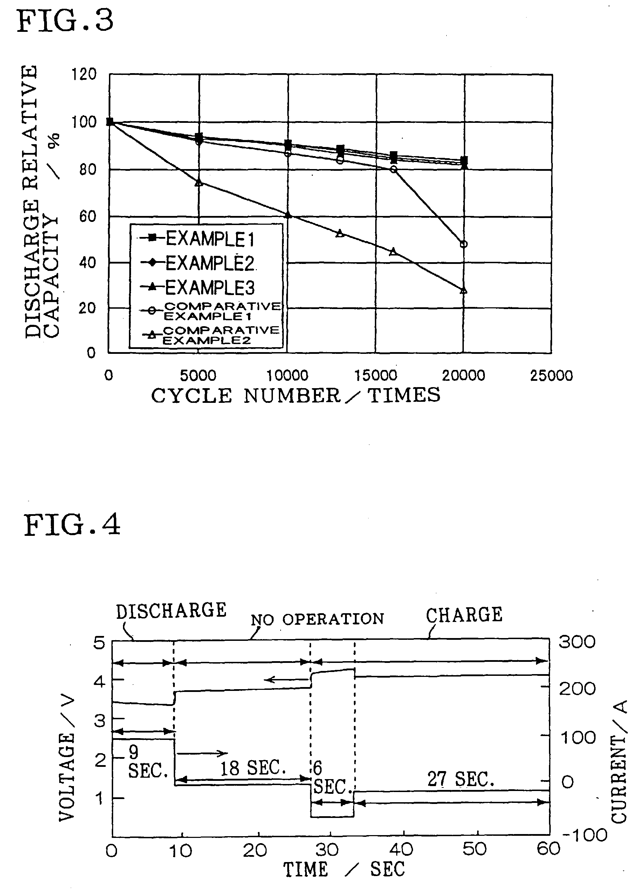

The cycle test was conducted by repeating one cycle of charge and discharge shown in Fig. 4. One cycle was such that a battery in charge state (discharge depth = 50%) was discharged at 100 A (corresponding to a discharge rate of 10C) for 9 seconds, then put in no operation for 18 seconds, thereafter charged at 70 A for 6 seconds, and successively charged at 18 A for 27 seconds to return to a charge state of 50%. Incidentally, the current value in second charge at 18 A was finely adjusted, whereby the variation in discharge depth of each cycle was minimized. In order to know the change in battery capacity during the cycle test, capacity measurement was made after various cycles at a current intensity of 0.2 C, a charge stoppage voltage of 4.1 V and a discharge stoppage voltage of 2.5 V, and each capacity obtained was divided by initial capacity to determine relative discharge capacities after various cycles.

The test results are shown in Fig. 3. There was no substantial difference in cycle property between Examples 1 to 3 of the present invention; however, when the total concentration was smaller, deterioration of cycle property is smaller. An increase in total concentration was seen after the test, in all the batteries. This increase in total concentration is presumed to be brought about by gradual dissolution of the water adsorbed by electrodes, etc., into non-aqueous electrolytic solution. In Comparative Example 1, the total concentration was 10,000 ppm or less after 16,000 cycles and the reduction in relative discharge capacity was small; however, the total concentration was larger than 10,000 ppm after 20,000 cycles and this is presumed to have caused an extremely large reduction in relative discharge capacity.

It is thought that water and HF catalyze formation of SEI layer and the rate of SEI layer formation is accelerated when the total concentration exceeds 10,000 ppm. As a result, the reduction in relative discharge capacity is presumed to be striking in Comparative Example 2 although there is no very large difference in total concentration between Comparative Examples 1 and 2 and Example 3.

After the test, no leakage of non-aqueous electrolytic solution from battery was observed. Therefore, it is presumed that there was, during the test, no penetration of water into battery from outside owing to the insufficient sealing of battery. If (1) there is penetration of water into battery from outside during the test, (2) the water is contained in the non-aqueous electrolytic solution of battery, and (3) the total concentration becomes larger than the level specified by the present invention, the deterioration of capacity is presumed to proceed at a high rate from that timing.

In the above, the present invention has been described mainly on a case using a wound type electrode body. However, the present invention is applicable independently of the structure of battery and can be employed suitably in a large-capacity battery in which water control during production steps is not easy. The present invention is suitably employed specifically in a battery using a wound type or lamination type electrode body and having a capacity of 2 Ah or more.

There is no restriction as to the use of the battery of the present invention. The lithium secondary battery of the present invention is suitably used particularly as a battery for driving the motor of electric automobile or hybrid electric automobile, which battery requires a low internal resistance and an excellent cycle property.

According to the present invention, there are specified the total concentration of water and hydrofluoric acid present in the non-aqueous electrolytic solution of assembled battery (water and hydrofluoric acid are contained in the non-aqueous electrolytic solution because water in atmosphere is absorbed by the non-aqueous electrolytic solution during battery assembling or the water adsorbed by the parts of battery dissolves, after battery assembling, into the non-aqueous electrolytic and such water generates hydrofluoric acid). Thereby, the present invention is effective for prevention of dissolution of positive electrode active substance, suppression of SEI layer formation on negative electrode active substance, prevention of corrosion of metal material, etc.; as a result, improved cycle property and longer battery life are obtained.

A lithium secondary battery includes an electrode body obtained by winding or laminating a positive electrode and a negative electrode via a separator, and a non-aqueous electrolytic solution containing a lithium compound as the electrolyte. The non-aqueous electrolytic solution contains water (H₂O) and hydrofluoric acid (HF) in a total concentration of 10,000 ppm or less. Owing to the restriction of the total concentration of water and hydrofluoric acid contained in the non-aqueous electrolytic solution, the lithium secondary battery can suppress the deterioration of battery properties caused by water and hydrofluoric acid and has excellent cycle property and reliability.

## Claims

1. A lithium secondary battery comprising:
an electrode body obtained by winding or laminating a positive electrode and a negative electrode via a separator, and a non-aqueous electrolytic solution containing a
lithium compound as the electrolyte, wherein the non-aqueous electrolytic solution contains water (H₂O) and hydrofluoric acid (HF) in a total concentration of 10,000 ppm or less.

2. A lithium secondary battery according to Claim 1, wherein the lithium compound is lithium hexafluorophosphate.

3. A lithium secondary battery according to Claim 1 or 2, wherein lithium manganese oxide of cubic system spinel structure containing lithium and manganese as the main components is used as the positive electrode active substance.

4. A lithium secondary battery according to any of Claims 1 to 3, wherein a highly graphitized carbon fiber is used as the negative electrode active substance.

5. A lithium secondary battery according to any of Claims 1 to 4, which has a battery capacity of 2 Ah or more.

6. A lithium secondary battery according to any of Claims 1 to 5, which is used in an electric automobile or a hybrid electric automobile.
